# EUROPEAN PATENT APPLICATION

(11) **EP 3 315 253 A1**
(43) Date of publication of application: **02.05.2018**
(21) Application number: 16817870.5
(22) Date of filing: 27.06.2016
(51) Int. Cl.: B23Q 17/09, B23B 51/00, B23C 9/00, B23G 5/00, B23K 20/12

(54) **ROTARY MACHINE TOOL EQUIPPED WITH SENSOR FOR REAL-TIME DETECTION OF STATE**

(30) Priority: 27.06.2015 JP 2015129352
(71) Applicant: Yamamoto Metal Technos Co., Ltd., Osaka-shi, Osaka 547-0034 (JP)
(72) Inventor: YAMAMOTO,Kengo, Osaka 5470034 (JP); YAMAMOTO,Taizoh, Osaka 5470034 (JP); ARAKI,Masafumi, Osaka 5470034 (JP)
(74) Representative: Franke, Dirk
(86) International application number: PCT/JP2016/069010
(87) International publication number: WO 2017/002762

(57) **Abstract**

Provided is a rotary machine tool such as an end-mill, drill, tap or the like, with which it is possible to measure, in real time, the damage, breakage or extreme wear thereof, without performing a special process or the like. The rotary machine tool equipped with sensor for real-time detection of state of the present invention is connected to the tip of a rotary machining device that can rotate about a rotary axis, and rotates about the same rotary axis, the tip coming into contact with the member to be machined, thereby cutting the member to be machined. The rotary machine tool is provided with at least: a sensor installation hole which has a vertically long shape having a central axis line approximately centering on the axis of rotation, the rear end being open to the exterior at the rear end of the main body of the rotary cutting tool, and the tip being above the tip of the main body of the rotary machine tool and closed off from the exterior; a sensor that is inserted from the rear end of the sensor installation hole, is positioned at the tip of the sensor installation hole and detects the state at the positioned position; and a sensor insertion hole that is connected to one end of the sensor and is coupled with the rear end of the rotary cutting tool.

## Description

### TECHNICAL FIELD

The present invention relates to a rotary machining tool, such as an end mill, a drill, a tap, or a rotary friction stirring tool, which becomes a workpiece of a rotary machining apparatus, configured such that the rupture, breakage, or excessive wear of the rotary machining tool can be measured in real time.

### BACKGROUND ART

In general, there are an apparatus that rotates a rotary member, e.g. a tool such as an end mill, a tap, or a drill, to machine a fixed workpiece (an object to be machined) and also a machining apparatus configured such that a tool is fixed and a workpiece is rotated, such as a cutting tool for a lathe. Rotary machining tools of these machining apparatuses have sufficient strength for normal machining. When such rotary machining tools are used for a long period of time or are used continuously, however, the rotary machining tools are worn by friction. If the friction wear exceeds a predetermined threshold (a wear limit), the rotary machining tool may be severely worn or may break instantaneously depending on the circumstances. In this case, it is necessary to temporarily stop the machining apparatus in order to replace the worn or broken tool with a new one. Particularly, in the case in which machining is continuously performed day and night, the machining apparatus is stopped for a long period of time due to replacement of the tool, whereby the total time required for machining is increased, or a workpiece (an object to be machined) is secondarily damaged by the broken tool, whereby production costs are greatly increased.

Therefore, there is a high necessity for providing a method of detecting the rupture or the durable limit of a rotary member such as a tool during the operation thereof (the rotation thereof). Conventionally, the operation of the machining apparatus or the time for replacement of the tool has been adjusted based on the experimental rule in order to satisfy such a necessity.

Based on the experimental rule, however, it is not possible to appropriately prevent the rupture, breakage, or excessive wear of the tool in advance. In addition, there is provided no method for detecting the load applied to the tool on the machine during the operation thereof or the vibration of the tool in real time, which means that it is not possible to prevent the rupture or excessive frictional wear of the tool in real time. In addition to the tool, a rotary tool of a friction stirring welding apparatus, which has been put into use in industry in recent years, is also a rotary member that is greatly worn by friction, and it is also important to precisely determine deterioration in the mechanical performance of the tool or the time for replacement of the tool.

In order to solve the above problem, the applicant of the present application has already proposed a real-time heat measurement tool configured to be rotated in the state of being synchronized with a thermocouple inserted into a rotary machining tool (Patent Document 1). Afterward, when the temperature of the tool is actually detected in real time, it has been examined how the thermocouple is to be mounted in many different consumables like the tool. Here, it has been also examined whether a cooling hole provided in the tool can be used as a hole for mounting the thermocouple.

In the case in which the tool is originally used as a rotary machining tool, however, it is first and foremost necessary to secure the strength of the tool, and thus it is not preferable to machine the interior of the tool but it is preferable to cool the tool in the external atmosphere. In contrast, a method of circulating a liquid coolant in a rotary machining tool having a large shaft diameter and a difference between the surface temperature and the interior temperature thereof in order to cool the rotary machining tool may be adopted. In the case in which a change in the interior temperature of the rotary machining tool formed from the above-described perspective is detected in real time, therefore, it is not possible to use the tool without change. Furthermore, in the case in which the liquid coolant is circulated, it is necessary to form a circulation channel in the tool or to form an inlet and an outlet for the liquid coolant in the tool, which is not desirable from aspects such as that of temperature detection, since unnecessary channels may be formed or heat dissipation may occur. Therefore, there is a necessity for providing a dedicated tool that is adapted to real-time measurement of a rotary machining tool.

Furthermore, it is preferable for the main constituent who measures the temperature of the tool in real time to be a full-time operator. In actuality, however, it is difficult to manufacture a detection tool having the same shape as machining tools that are desired by people who perform machining. In particular, it is necessary for each person who performs machining to have know-how in order to form an appropriate hole in the tool, to insert a thermocouple into the hole, and to position the thermocouple in the hole using an adhesive. Furthermore, it is difficult to acquire accurate data.

### RELATED ART DOCUMENT

### PATENT DOCUMENT

Patent Document 1: Japanese Patent Application Publication No. 2015-36174

### DISCLOSURE OF THE INVENTION

### PROBLEM TO BE SOLVED BY THE INVENTION

The present invention has been made in view of the above problems, and it is an object of the present invention to provide a rotary machining tool that becomes a workpiece of a rotary machining apparatus, such as an end mill, a drill, and a tap, wherein the rupture, breakage, or excessive wear of the tool can be measured in real time while having a specification similar to that of an ordinary tool without particular machining.

### MEANING FOR SOLVING THE PROBLEM

The present invention provides a rotary machining tool (1;51) connected to the front end of a rotary machining apparatus that is rotatable about the axis of rotation so as to rotate about the same axis as the axis of rotation for machining a member to be machined in the state in which the front end of the rotary machining tool is in contact with the member to be machined (for example, a rotary machining tool 1 with a sensor or a rotary machining tool 51 with a sensor for friction stirring in this embodiment). The rotary machining tool includes at least:
a vertically long sensor mounting hole(5;55) having a central axial line that is approximately coaxial with the axis of rotation, the front end of the sensor mounting hole being open to the outside at the rear end of a body unit (3; 53) of the rotary machining tool, the rear end of the sensor mounting hole being closed from the outside at a height higher than the front end of the rotary machining tool body unit (for example, a thermocouple insertion hole 5 or 55 in this embodiment); and
a sensor (11; 61) inserted into the sensor mounting hole through the rear end of the sensor mounting hole so as to be positioned at the front end of the sensor mounting hole for sensing a condition in the state in which the sensor is positioned (for example, a thermocouple 11 or 61 in this embodiment).

In addition, the rotary machining tool may further include a sensor insertion unit(7;57) connected to one end of the sensor and coupled to the rear end of the rotary machining tool, and the sensor may be at least a thermocouple.

According to the present invention, a rotary machining tool configured such that a thermocouple is inserted into and positioned in the rotary machining tool in advance is provided. Specifically, a sensor hole having a position, diameter, and depth appropriate for temperature measurement is formed in each tool, a sensor insertion unit is connected to the sensor hole in the state in which a thermocouple is fixed in the sensor hole in order to cover the sensor hole, and a cable extending from the thermocouple is drawn to the outside. In the case in which such a rotary machining tool is provided, the rotary machining tool is attached to a rotary machining apparatus in the same manner as an ordinary tool without particular machining, whereby the rupture, breakage, or excessive wear of the rotary machining tool can be easily measured in real time during the operation thereof.

In addition, the sensor insertion unit may have a connection portion(7a;57a) connected to the front end of the rotary machining tool body unit and a binding portion(7b;57b) connected to the connection portion, and
one end of the thermocouple may be fixed to the connection portion, the binding portion having a cable(13;63) connected to the one end of the thermocouple so as to protrude to the outside, the binding portion being electrically conductive.

Alternatively, the sensor insertion unit may be constituted by two members, namely a connection portion and a binding portion. The connection portion, which is coupled to the tool and is in direct contact therewith, may not only serve to fix the end of the thermocouple but may also serve as a heat insulating member. Consequently, a member that exhibits low thermal resistance, such as a cable or another sensor, may be mounted to the binding portion.

The connection portion may be determined in advance in consideration of the rotary machining tool body unit, and the binding portion may have a standardized shape.

Also, in the case in which the sensor insertion unit is constituted by two members, namely a connection portion and a binding portion, and the connection portion is configured to correspond to each of a tool body unit having many different shapes and properties, the binding portion may be standardized so as to be used for any tool body unit, thereby achieving cost reduction at the time of mass production.

In addition, an acceleration sensor and/or a load cell may be mounted in the binding portion, and one end of the cable may be connected to the acceleration sensor and/or the load cell.

According to this rotary machining tool, it is possible to monitor fine vibration of the rotary machining tool, the movement of the axis of the rotary machining tool, etc., in addition to real-time temperature measurement of the rotary machining tool using the thermocouple.

Furthermore, the sensor insertion unit may have a connection portion connected to the front end of the rotary machining tool body unit and a binding portion connected to the connection portion, and
one end of the thermocouple may be fixed to the connection portion, the binding portion having a temperature reception unit (37; 91) connected to the one end of the thermocouple for receiving temperature information from the thermocouple and a transmission unit(39;93) for transmitting the temperature information received by the temperature reception unit to the outside in a wireless fashion.

Since this rotary machining tool has a function of directly transmitting real-time information detected from the tool to an external detection device in a wireless fashion, it is not necessary to particularly modify the structure of the rotary machining tool, whereby a general-purpose apparatus may be utilized without change.

Also, in another embodiment of the rotary machining tool according to the present invention,
the sensor insertion unit may have a cable for fixing one end of the thermocouple,
the cable being connected to the one end of the thermocouple so as to protrude to the outside, the cable being electrically conductive.

That is, although the sensor insertion unit is not constituted by two members, namely a connection portion and a binding portion, as described above, it is possible to sufficiently achieve the object thereof while having a simple and inexpensive structure in the case in which a problem of heat resistance does not occur since the tool is standardized to the original extent, whereby versatility is improved.

Also, even in the present invention, an acceleration sensor and/or a load cell may be mounted in the sensor insertion unit. In addition, the sensor insertion unit may have a temperature reception unit connected to the one end of the thermocouple for receiving temperature information from the thermocouple and a transmission unit for transmitting the temperature information received by the temperature reception unit to the outside in a wireless fashion. Furthermore, information acquired by the acceleration sensor and/or the load cell, which is mounted in the binding portion, may also be transmitted to the outside in a wireless fashion using a method similar to the method of transmitting the temperature information.

A further embodiment of the present invention provides a rotary machining tool including:
a vertically long sensor mounting hole having a central axial line that is approximately coaxial with the axis of rotation, the front end of the sensor mounting hole being open to the outside at the rear end of a body unit of the rotary machining tool, the rear end of the sensor mounting hole being closed from the outside at a height higher than the front end of the rotary machining tool body unit; and
a sensor inserted into the sensor mounting hole through the rear end of the sensor mounting hole so as to be positioned at the front end of the sensor mounting hole for sensing a condition in the state in which the sensor is positioned, a sensor placement opening(103) configured to communicate with the rear end of the sensor mounting hole, the sensor placement opening being open at the rear end of the rotary machining tool, and a sensor insertion unit(97) connected to one end of the sensor and coupled to the rear end of the rotary machining tool.

In this rotary machining tool, no separate sensor insertion unit is provided, and a sensor placement opening, in which another sensor (an acceleration sensor, a load cell, etc.) is directly mounted, is provided at the rear end of the tool, unlike the above-described rotary machining tool. In the case in which this tool is adopted, it is possible to easily manufacture a rotary machining tool having a simple structure, where manufacturing costs are reduced and manufacturing efficiency is improved. As a result, versatility is improved. Meanwhile, in the case in which another sensor is simply provided in the tool, heat generated by machining reaches the sensor from the front end thereof, unlike the tool having the sensor insertion unit described above. In order to solve this problem, the present invention is configured such that an opening for mounting a sensor is newly provided in the vicinity of the rear end of the tool (the body unit) and the sensor is accurately positioned at the rear end of the tool, at which the temperature of the tool is lowest. Furthermore, the sensor is exposed to the external atmosphere, whereby heat dissipation is improved. Consequently, it is possible to greatly reduce the thermal load of the sensor.

Also, in the rotary machining tool, the sensor placement opening may spread from the sensor mounting hole in the radial direction. Since the sensor is disposed at the radial outer portion, it is possible to improve the sensitivity of the sensor.

Also, in the rotary machining tool, the sensor placement opening may be provided at a region held by the rotary machining apparatus. Even in the case in which the diameter of the sensor mounting hole and the diameter of the sensor placement opening are configured so as to be almost equal to each other in preferential consideration of manufacturability and cost, the sensor is positioned within a region (within a range) held by the rotary machining apparatus in the axial direction, whereby it is possible to utilize the rotary machining apparatus as a heat dissipation means.

In addition, the gap between the sensor and the sensor mounting hole may be filled with a thermosetting material containing silver particles, the thermosetting material being heat-treated in the state in which the sensor is inserted into the sensor mounting hole.

Specifically, when the sensor, such as a thermocouple, is inserted into and fixed in the sensor mounting hole, sensor mounting hole may be filled with a thermosetting material containing silver particles, and the thermosetting material may be dried to bond the sensor, in consideration of the thermal conductivity of the sensor and the sensor mounting hole (i.e. the rotary machining tool). In this case, the thermal conductivity of the thermosetting material is low in a half-dried state, and the thermosetting material is hardened and securely fixed by frictional heat generated when the tool is used. During the hardening process, the thermosetting material is hardened at a biased state by the centrifugal force of the tool, or latent heat is generated (i.e. the temperature is lowered) when a solvent of the thermosetting material is evaporated, which may affect the temperature of the tool that is measured.

In the present invention, therefore, a process of heat-treating the thermosetting material at a high temperature after filling the sensor mounting hole with the thermosetting material is further included. As a result, the strength with which the sensor is fixed is secured, aggregation of the thermosetting material in a biased sate by centrifugal force when the tool is used is prevented, and generation of latent heat due to evaporation of the solvent is prevented. For example, in the case in which the sensor mounting hole is filled with Dotite (registered trademark) as a thermosetting material containing silver particles, heat treatment is performed at a temperature of 150 °C for 30 minutes. Through this heat treatment, it is verified that thermal fluctuation is not observed until the temperature of the thermosetting material reaches at least 450 °C even in the case in which the thermosetting material is used, for example, for the first time.

Furthermore, the temperature information transmitted to the outside by the transmission unit in the wireless fashion may be digital information, and the rotary machining tool may further include a digital to analog conversion means for receiving the temperature information, converting the received temperature information into analog information, and outputting the converted analog information as a voltage signal, the digital to analog conversion means being provided outside the rotary machining tool.

The temperature information from the rotary machining tool is digitized for wireless transmission. However, the temperature information may be received in a wireless fashion, and then the temperature information may be converted into a voltage signal through digital to analog conversion in order to use existing general-purpose displays or measurement instruments. Consequently, it is possible to use the rotary machining tool according to the present invention even in the case in which there is no separate dedicated measurement and analysis apparatus, whereby it is possible to expand the range in which the rotary machining tool according to the present invention is utilized.

### EFFECTS OF THE INVENTION

According to the present invention, the rotary machining tool is attached to a rotary machining apparatus in the same manner as an ordinary tool without particular machining, whereby the rupture, breakage, or excessive wear of the rotary machining tool can be more easily measured in real time during the operation thereof.

### BRIEF DESCRIPTION OF THE DRAWINGS

FIG. 1 is a partial sectional plan view showing a rotary machining tool with a sensor according to the present invention;
FIG. 2 is a sectional view showing the structure of a rotary machining tool holder that holds the rotary machining tool with the sensor according to the present invention;
FIG. 3 is a block diagram showing the flow of an electrical signal indicating information about the temperature of a rotary machining tool body unit measured by a thermocouple shown in FIG. 1;
FIG. 4 is a flowchart showing an example of a temperature measurement process using the rotary machining tool with the sensor according to the present invention;
FIG. 5 is a partial sectional plan view showing the structure of a friction stirring tool with a sensor;
FIG. 6 is a sectional view showing the structure of a friction stirring tool holder that holds the friction stirring tool with the sensor;
FIG. 7 is a sectional view showing a sensor insertion unit in the rotary machining tool with the sensor according to the present invention or the friction stirring tool with the sensor;
FIG. 8 is a sectional view showing the end of a thermocouple insertion hole in the rotary machining tool body unit or a friction stirring tool body unit;
FIGS. 9(a), 9(b), and 9(c) are sectional views showing examples of the shape of the end of the thermocouple insertion hole in the rotary machining tool body unit or the friction stirring tool body unit;
FIGS. 10(a), 10(b), and 10(c) are side views showing examples of the shape of the end of the thermocouple insertion hole in the rotary machining tool body unit or the friction stirring tool body unit;
FIG. 11 is a view showing a method of applying an adhesive to the thermocouple insertion hole or filling the thermocouple insertion hole with the adhesive in order to fix the thermocouple, wherein FIG. 11(a) is a view showing a conventional fixing method and FIG. 11 (b) is a view showing a fixing method that is adopted in the present invention;

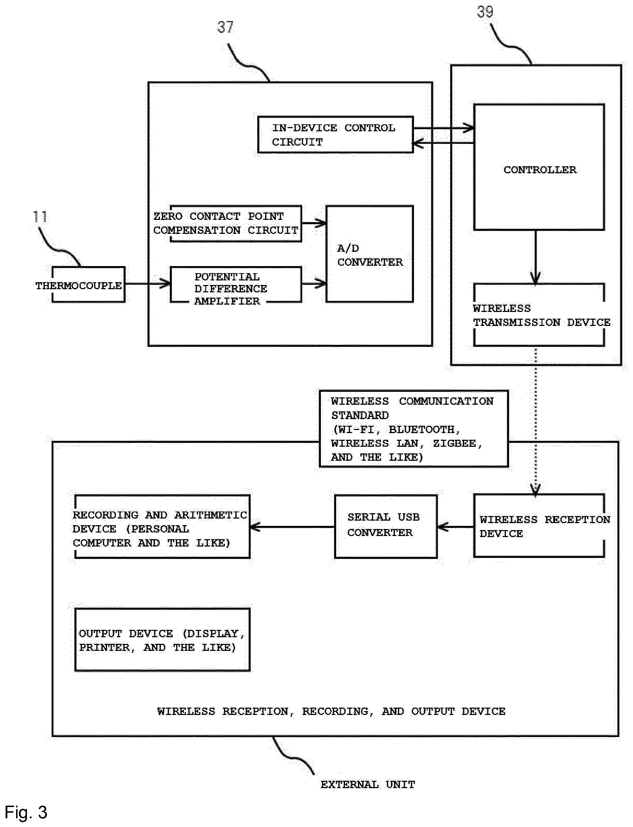

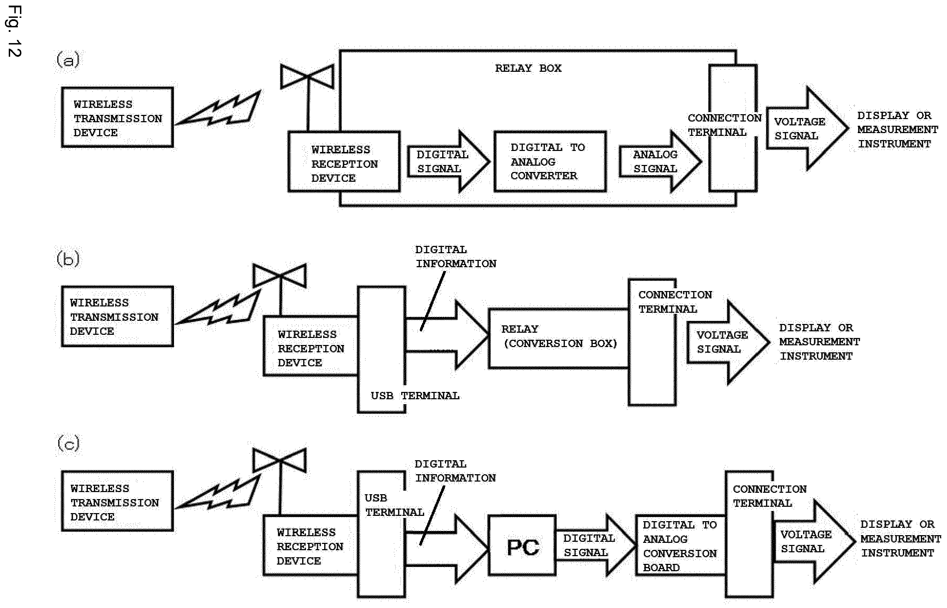

FIG. 12 is a view showing examples of output of digital information as an analog voltage signal, wherein FIG. 12 (a) is a view showing a method of outputting digital information transmitted by a wireless transmission device of FIG. 3 as an analog voltage signal via a relay box, FIG. 12(b) is a view showing a method of extracting digital information transmitted by the wireless transmission device of FIG. 3 through a USB terminal and outputting the extracted digital information as an analog voltage signal via a conversion box, and FIG. 12 (c) is a view showing a method of extracting digital information transmitted by the wireless transmission device of FIG. 3 through the USB terminal and outputting the extracted digital information as an analog voltage signal via a PC and a digital to analog conversion board; and
FIG. 13 is a view showing a concrete example of the structure of the relay box.

### BEST MODE FOR CARRYING OUT THE INVENTION

### <FIRST EMBODIMENT>

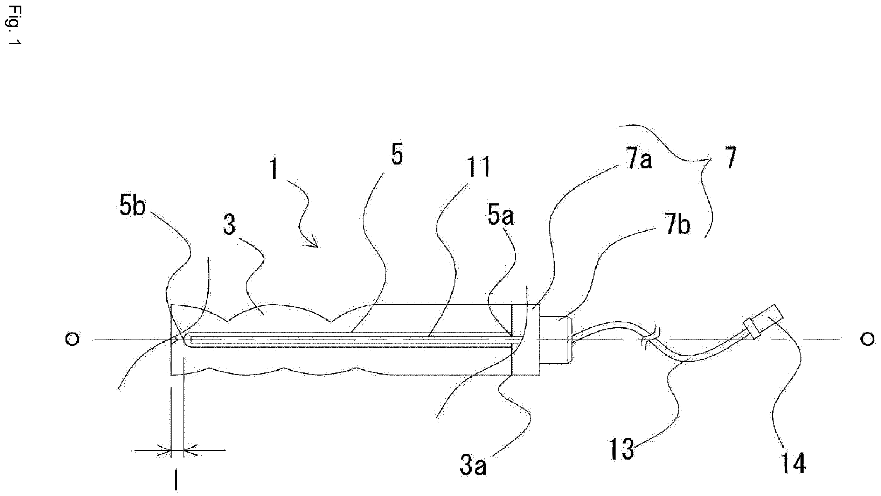

Hereinafter, a first embodiment of a rotary machining tool with a sensor for real-time condition detection according to the present invention will be described in detail with reference to FIGS. 1 to 4. However, the present invention is not limited to the illustrated embodiment. In addition, the drawings are provided to conceptually describe the present invention. For easy comprehension, therefore, dimensions, ratios, or numbers may be exaggerated or simplified as needed. Furthermore, in the following description, the same reference numbers will be used to refer to the same or like parts, a duplicate description of which will be omitted.

The structure of a rotary machining tool 1 with a sensor for real-time condition detection according to the present invention will be described in detail with reference to FIG. 1. FIG. 1 is a partial sectional schematic view showing the structure of the rotary machining tool 1 with the sensor. Also, in the first embodiment, a rotary machining tool for cutting will be described by way of example on the assumption that an end mill for milling is used as the rotary machining tool. As shown in FIG. 1, the rotary machining tool 1 with the sensor is rotatable about an axis of rotation O-O, and generally includes a rotary machining tool body unit 3, a sensor insertion unit 7, a thermocouple 11 (a temperature measurement element such as a thermistor or a platinum resistance thermometer may also be used), a cable 13, and a connector 14.

The rotary machining tool body unit 3 is generally configured to have a structure that is almost identical to the structure of a general end mill. The rotary machining tool body unit 3 is configured in an approximately cylindrical shape. The rotary machining tool body unit 3 is configured such that spiral blades are provided on the surface of an approximate middle part 3c extending from an end 3a, to which the sensor insertion unit 7 is connected, to a front end 3b, which is opposite the end 3a. In this embodiment, the size of the rotary machining tool body unit 3, the number of spiral blades, and the pitch between the spiral blades are not specified, since the rotary machining tool with the sensor for real-time condition detection according to the present invention is a mere product variation and is not different in basic structure from a general product. A cylindrical thermocouple insertion hole 5 is provided in the rotary machining tool body unit 3 so as to extend from the end 3a thereof, on which the sensor insertion unit 7 is fitted, to the vicinity of the front end 3b thereof, which is opposite the end 3a. In FIG. 1, one thermocouple insertion hole 5 is located in the center of the rotary machining tool body unit 3 in the radial direction. However, at least one thermocouple insertion hole 5 may be provided in the approximately center of the rotary machining tool body unit 3, and the position of the thermocouple insertion hole 5 may be changed and determined according to the purpose of temperature measurement. In addition, a plurality of thermocouple insertion holes 5 may be disposed in the rotary machining tool body unit 3 in the state of being spaced apart from each other in order to measure the temperatures of multiple places at the same time.

One end 5a of the thermocouple insertion hole 5 is open such that the thermocouple 11 can be inserted therethrough, and the other end 5b of the thermocouple insertion hole 5 (adjacent to the front end of the end mill) extends to the front end of the end mill and is closed. The distance 1 from the front end 5b of the thermocouple insertion hole 5 to the front end 3b of the end mill is determined in advance in consideration of the material of the end mill, the diameter of the tool, etc. such that the front end 5b of the thermocouple insertion hole 5 is not open even in the case in which the end mill is worn and such that heat from the end mill is transmitted without delay.

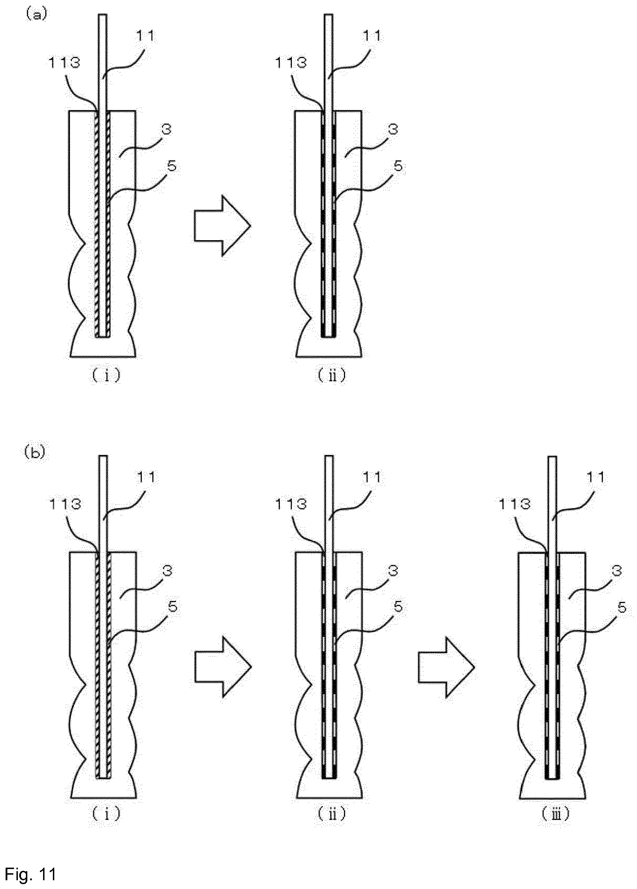

Hereinafter, a method of positioning the thermocouple 11 in the thermocouple insertion hole 5, which is formed in the rotary machining tool body unit 3, will be described. FIG. 11 is a view showing a method of applying an adhesive 113 to the thermocouple insertion hole 5 or filling the thermocouple insertion hole 5 with the adhesive 113 in order to fix the thermocouple 11. FIG. 11 (a) is a view showing a conventional fixing method, and FIG. 11 (b) is a view showing a fixing method that is adopted in the present invention.

A thermosetting material 113 containing silver particles is used as the adhesive. Here, Dotite (the name of a product made by Fujikura Kasei Co., Ltd) was used. Dotite 113 is a conductive adhesive containing silver particles, and is widely used in the field of microelectronics. In the case in which Dotite exhibits the adhesive property thereof after being naturally dried, however, the adhesive strength of Dotite is low in a half-dried state, and the thermal conductivity of Dotite is also low.

As shown in FIGS. 11(a)(i) and 11(b), which are views respectively showing a conventional method of fixing the thermocouple 11 and a new method of fixing the thermocouple 11, Dotite 113 is applied to the thermocouple insertion hole 5 or to the thermocouple 11, and the thermocouple 11 is inserted into the thermocouple insertion hole 5. In the conventional fixing method, Dotite is naturally dried and is hardened by environmental heat. When the rotary machining tool body unit 3 is rotated in this state (see FIG. 11 (a) (ii)), the adhesive strength and thermal conductivity of Dotite are reduced. Furthermore, Dotite 113 is biased in the gap between the thermocouple insertion hole 5 and the thermocouple 11 by centrifugal force. When the temperature of the tool increases in this state, Dotite 113 is hardened. As a result, Dotite 113 may not exhibit sufficient thermal conductivity. Furthermore, in a half-dried state, when the rotary machining tool body unit 3 is rotated and thus the tool increases, the solvent of Dotite 113 evaporates, with the result that a latent heat phenomenon (the reduction of temperature) occurs. This consequently impedes proper measurement of the temperature of the rotary machining tool body unit 3.

In contrast, in a new method of fixing the thermocouple 11 shown in FIG. 11(b), after the application of Dotite 113, a process of heat-treating Dotite, for example, at a temperature of 150 °C for 30 minutes and sufficiently hardening the same in a non-rotating state is further included, as shown in FIG. 11(b)(i). In the case in which this process is further included, it is possible to secure the adhesive strength and thermal conductivity of Dotite, and Dotite 113 is prevented from being biased and hardened by centrifugal force when the rotary machining tool body unit 3 is rotated for the first time. In addition, even in the case in which the temperature of the tool is increased by rotating the rotary machining tool body unit, a latent heat phenomenon does not occur, since Dotite has already been hardened. Even in an actual TG-DTA (Thermogravimetry and Differential Thermal Analysis), it can be seen that the physical properties of the tool are not changed unless the temperature of the tool increases to 450 °C or higher.

Referring back to FIG. 1, the sensor insertion unit 7 (a connector member) includes a connection portion 7a and a binding portion 7b. The connection portion 7a is capable of holding the end of the thermocouple 11 while pulling the end of the thermocouple 11 into the binding portion 7b. The connection portion 7a binds and fixes the thermocouple 11 and the cable 13, which is connected to the end of the thermocouple 11, in the binding portion 7b. In addition, a small-sized acceleration sensor (not shown) or a load cell may be disposed in the binding portion 7b. Consequently, it is also possible to monitor the fine vibration of the rotary machining tool 1 with the sensor or the movement of the axis of the rotary machining tool 1 with the sensor, in addition to the temperature of the rotary machining tool 1 with the sensor while the rotary machining tool 1 with the sensor is used.

The thermocouple 11 is inserted into the thermocouple insertion hole 5 formed in the rotary machining tool body unit 3, and the end of the rotary machining tool body unit 3 is integrally bonded to the connection portion 7a of the sensor insertion unit 7. The bonding method is performed using an adhesive that withstands high temperatures. However, brazing may be used, or screw threads may be formed in the end 3a of the rotary machining tool body unit 3 and in the connection portion 7a such that the end 3a of the rotary machining tool body unit 3 and the connection portion 7a are engaged with each other. The cable 13 is inserted into the binding portion 7b from the side of the binding portion 7b that is opposite the connection portion 7a, and the cable 13 is bound to (connected to) the end of the thermocouple 11 in the binding portion 7b, as described above.

The outside of the portion of the cable 13 that extends out of the binding portion 7b is coated with glass fiber that exhibits thermal resistance so as to be insulated, as needed, and a small-sized metal connector 14 having a predetermined length is connected to the front end of the cable 13. The connector 14 is connected to a reception connector 29 disposed in a rotary machining tool holder 21, a description of which will follow, and transmits information about the result of measurement in the rotary machining tool 1 with the sensor to the rotary machining tool holder 21.

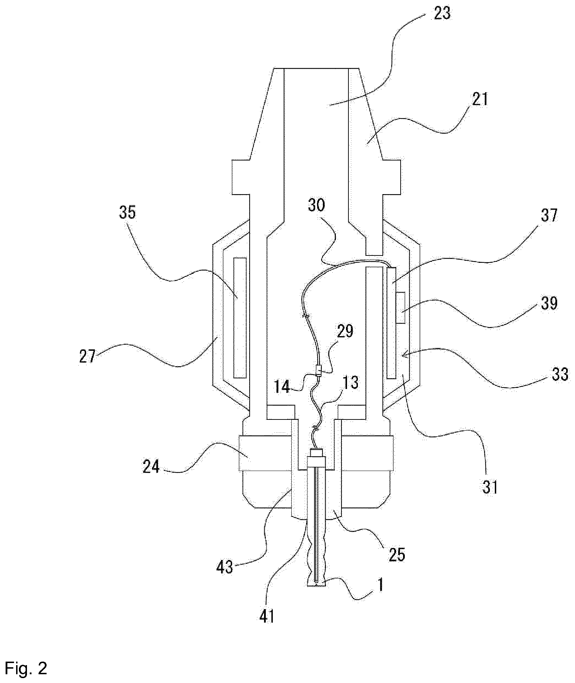

Next, the structure of the rotary machining tool holder 21, which holds the rotary machining tool 1 with the sensor described above, and a method of holding the rotary machining tool 1 with the sensor will be described in detail with reference to FIG. 2.

FIG. 2 is a sectional view showing the structure of the rotary machining tool holder 21, which holds the rotary machining tool 1 with the sensor. The rotary machining tool holder 21 is rotatable about the axis of rotation O-O according to the movement of a machining apparatus (not shown). The rotary machining tool holder 21 is provided with a hollow hole 23 extending from the front end of the rotary machining tool holder 21, which holds the rotary machining tool 1 with the sensor, to the rear end of the rotary machining tool holder 21, which is opposite the front end of the rotary machining tool holder 21, in an axial direction of the axis of rotation. The rotary machining tool holder 21 is configured to hold the rotary machining tool 1 with the sensor via a collet nut 25 by fastening a fastening nut 24 formed at the front end thereof. Consequently, it is possible to hold the rotary machining tool 1 with the sensor irrespective of the size thereof, thereby improving versatility. In addition, even in the case in which the rotary machining tool 1 with the sensor is severely broken due to trouble caused during machining or even in the case in which the peripheral part of the rotary machining tool 1 with the sensor contacts anything other than a workpiece due to incorrect manipulation of the machining apparatus, the rotary machining tool holder 21 is prevented from being damaged, and it is sufficient to replace only the collet nut 25.

In addition, the outer circumferential part of the rotary machining tool holder 21 is covered by a cover member 27, and a hollow layer 31 is formed between the side surface of the rotary machining tool holder 21 and the cover member 27. An electronic board 33 and a power supply unit 35 are disposed in the hollow layer 31. A reception cable 30, which extends from the electronic board 33, is provided at the front end thereof with a reception connector 29. The reception cable 30 is disposed in the hollow hole 23 formed in the rotary machining tool holder 21 through a communication hole 28, which communicates with the hollow hole 23, from the hollow layer 31.

The electronic board 33 includes a temperature reception unit 37 and a transmission unit 39. The temperature reception unit 37 is configured to receive information about the temperature of the rotary machining tool 1 with the sensor from the thermocouple 11 via the cable 13 and the reception cable 30 in real time, and the transmission unit 39 is configured to transmit the information about the temperature of the rotary machining tool 1 with the sensor received by the temperature reception unit 37 to an external unit in a wireless fashion.

Next, a method of connecting and holding the rotary machining tool holder 21 and the rotary machining tool 1 with the sensor will be described. First, the rotary machining tool 1 with the sensor is inserted into a tool insertion hole 41 provided in the collet nut 25. Subsequently, the reception cable 30, which is disposed in the hollow hole 23 formed in the rotary machining tool holder 21, is drawn from a collect insertion hole 43, the reception connector 29 and the connector 14 of the rotary machining tool 1 with the sensor are connected to each other, the reception connector 29 and the connector 14, which are connected to each other, are received in the hollow hole 23, and the rotary machining tool 1 with the sensor is inserted into the collect insertion hole 43 together with the collet nut 25.

After the collet nut 25 is inserted into the collect insertion hole 43 until the end of the collet nut 25 comes into contact with the bottom of the collect insertion hole 43, the fastening nut 24 is fastened using a dedicated wrench (not shown) in order to fix the collet nut 25 to the rotary machining tool holder 21 while being held by the rotary machining tool holder 21.

In addition, as described above, the power supply unit 35 is covered by a cover member 27 in the same manner as the electronic board 33, and is provided in the hollow layer 31. The power supply unit 35 is configured to supply sufficient power to the electronic board 33, although the power supply unit 35 may be generally constituted by a rechargeable or non-rechargeable battery.

Next, the flow of an electrical signal indicating information about the temperature of the rotary machining tool body unit 3 measured by the thermocouple 11 will be described with reference to FIG. 3.

FIG. 3 is a block diagram showing the flow of an electrical signal indicating information about the temperature of the rotary machining tool body unit 3 measured by the thermocouple 11. In the figure, respective arrows indicate the flow of an electrical signal indicating information about the temperature of the rotary machining tool body unit 3 measured by the thermocouple 11. Based on the type of a signal transmission route, a wired system is indicated by a solid line, and a wireless system is indicated by a broken line.

The temperature reception unit 37 of the electronic board 33 includes a zero contact point compensation circuit, a potential difference amplifier, an A/D (analog/digital) converter, and an in-device control circuit. In addition, the transmission unit 39 includes a controller and a wireless transmission device. First, an electrical signal indicating information about the temperature of the rotary machining tool body unit 3 measured by the thermocouple 11 is sent to the temperature reception unit 37 in a wired fashion, and reaches the A/D (analog/digital) converter via the potential difference amplifier. Subsequently, the temperature information is converted into digital information by the A/D (analog/digital) converter, reaches the wireless transmission device in the transmission unit 39, and is transmitted to the external unit by the wireless transmission device in a wireless fashion.

As shown in FIG. 3, the external unit is constituted by a wireless reception, recording, and output device. The wireless reception, recording, and output device includes a wireless reception device, a serial USB (Universal Serial Bus) converter, a recording and arithmetic device such as a personal computer, and an output device such as a display or a printer, which are arranged in that order from the upstream side to the downstream side in the direction of flow of an electrical signal. In addition, Wi-Fi (Wireless Fidelity), Bluetooth, wireless LAN (Local Area Network), ZigBee, and the like may be used as the wireless communication standard between the wireless transmission device and the wireless reception device, indicated by the broken line in FIG. 3.

In an example, the electrical signal indicating the information about the temperature of the rotary machining tool body unit 3 transmitted to the external unit by the wireless communication device in the wireless fashion is received by the wireless reception device of the external unit, and reaches the recording and arithmetic device, such as the personal computer via the serial USB (Universal Serial Bus) converter. Subsequently, the electrical signal indicating the information about the temperature of the rotary machining tool body unit 3 is processed by the recording and arithmetic device such as the personal computer, and is displayed on a display or printed on paper using a printer such that the information is transferred to a user.

In the example shown in FIG. 3, the external unit is constituted by the wireless reception, recording, and output device, and the digital signal indicating the temperature information from the wireless reception device of the wireless reception, recording, and output device is converted into a digital signal for a personal computer (hereinafter, referred to as a 'PC') by the serial USB (Universal Serial Bus) converter along the flow of the electric signal. In another example, on the other hand, the digital signal indicating the temperature information may not be converted into a digital signal for a PC, and the digital signal received by the wireless reception device of the external unit may be output to a general-purpose display or measurement instrument as an analog voltage signal via a relay box or a PC. Although digitization is performed for wireless transmission, it is possible to utilize a general-purpose display or measurement instrument that uses an analog voltage signal.

Also, in the example shown in FIG. 3, the external unit is constituted by the wireless reception, recording, and output device, and the digital signal indicating the temperature information from the wireless reception device of the wireless reception, recording, and output device is converted into a digital signal for a personal computer (hereinafter, referred to as a 'PC') by the serial USB (Universal Serial Bus) converter along the flow of the electric signal. In another example, on the other hand, the digital signal indicating the temperature information may not be converted into a digital signal for a PC, and the digital signal received by the wireless reception device of the external unit may be output to a general-purpose display or measurement instrument as an analog voltage signal via a relay box or a PC. Although digitization is performed for wireless transmission, it is possible to utilize a general-purpose display or measurement instrument that uses an analog voltage signal.

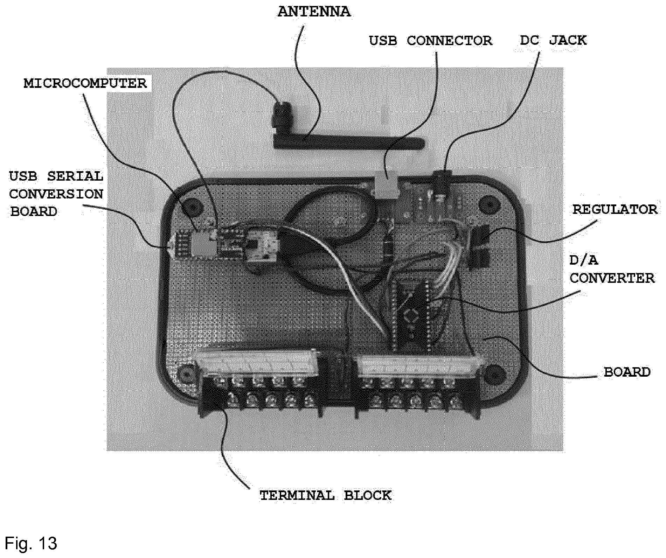

FIG. 12 is a view schematically showing some examples of output of digital information as an analog voltage signal, wherein FIG. 12 (a) is a view showing a method of outputting digital information transmitted by the wireless transmission device of FIG. 3 as an analog voltage signal via a relay box, FIG. 12(b) is a view showing a method of extracting digital information transmitted by the wireless transmission device of FIG. 3 through a USB terminal and outputting the extracted digital information as an analog voltage signal via a conversion box, and FIG. 12(c) is a view showing a method of extracting digital information transmitted by the wireless transmission device of FIG. 3 through the USB terminal and outputting the extracted digital information as an analog voltage signal via a PC and a digital to analog conversion board. Meanwhile, FIG. 13 is a view showing a concrete example of the structure of the relay box. In general, the relay box includes an antenna for receiving temperature information in a wireless fashion, a microcomputer, a USB serial conversion board, a USB connector for PC connection, a regulator, a D/A converter (a digital/analog converter), another board, and a terminal block.

In the case of FIG. 12(a), digital temperature information transmitted by the wireless transmission device of the transmission unit 39 of FIG. 3 is received by a wireless reception device of the relay box, which serves as an external unit. The digital signal is converted into an analog signal by a digital to analog converter, and is output to a display or measurement instrument as an analog voltage signal through a connection terminal. Specifically, as shown in the structure example of FIG. 13, temperature information (or load information, vibration information, etc.) transmitted from the outside in a wireless fashion is received by the wireless reception device, is converted into an analog voltage signal by the D/A converter, and is output through the terminal block.

Also, in the case of FIG. 12(b), digital temperature information transmitted by the wireless transmission device of the transmission unit 39 of FIG. 3 is received by a dedicated wireless reception device that is provided separately, is extracted through a USB terminal thereof, is converted into an analog signal by a digital to analog converter of a relay box in the same manner as in FIG. 12(a), and is output to a display or measurement instrument as an analog voltage signal through a connection terminal. Specifically, as shown in the structure example of FIG. 13, temperature information transmitted in a wireless fashion and extracted through the USB terminal is received by the USB connector, is converted into an analog voltage signal by the D/A converter, and is output through the terminal block. Meanwhile, the temperature information received by the relay box may be converted into digital information for a PC by a USB serial converter provided in the relay box, and may be output to the PC through the USB connector.

Also, in the case of FIG. 12(c), digital temperature information transmitted by the wireless transmission device of the transmission unit 39 of FIG. 3 is received by a dedicated wireless reception device that is provided separately, is converted into digital information for a PC by a USB serial converter provided in the wireless reception device, and is introduced into the PC through an interface of the PC. Subsequently, a digital signal is output from the PC, is converted into an analog signal by an external digital to analog conversion board, and is output as a voltage signal. Here, the method of outputting the voltage signal through the digital to analog conversion is illustrated as a conceptual example, and therefore the present invention is not limited to the illustrated method.

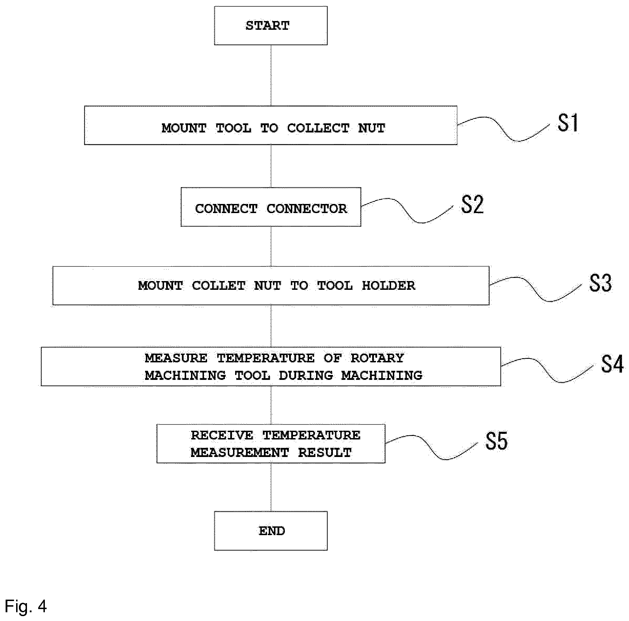

Next, an example of a temperature measurement method using the rotary machining tool 1 with the sensor will be described with reference to FIG. 4. FIG. 4 is a flowchart showing an example of a temperature measurement process using the rotary machining tool 1 with the sensor. First, as described above, the rotary machining tool 1 with the sensor is inserted into the tool insertion hole 41 formed in the collet nut 25 (S1). Subsequently, the reception cable 30, which is disposed in the hollow hole 23 formed in the rotary machining tool holder 21, is drawn from the collect insertion hole 43, and the reception connector 29 and the connector 14 of the rotary machining tool 1 with the sensor are connected to each other (S2).

Subsequently, the reception connector 29 and the connector 14 are received in the hollow hole 23, the rotary machining tool 1 with the sensor is inserted into the collect insertion hole 43 together with the collet nut 25, and the collet nut 25 is mounted to the rotary machining tool holder 21 (S3). A workpiece is machined by a machining apparatus using the rotary machining tool holder 21, and the temperature of the rotary machining tool body unit 3 during machining is measured using the thermocouple 11 disposed in the rotary machining tool 1 with the sensor (S4). Subsequently, information about the temperature of the rotary machining tool body unit 3 transmitted from the rotary machining tool holder 21 is received by the external unit, which transfers the information to a user through a personal computer (S5). The above five steps are sequentially carried out in order to perform temperature measurement using the rotary machining tool 1 with the sensor.

### <SECOND EMBODIMENT>

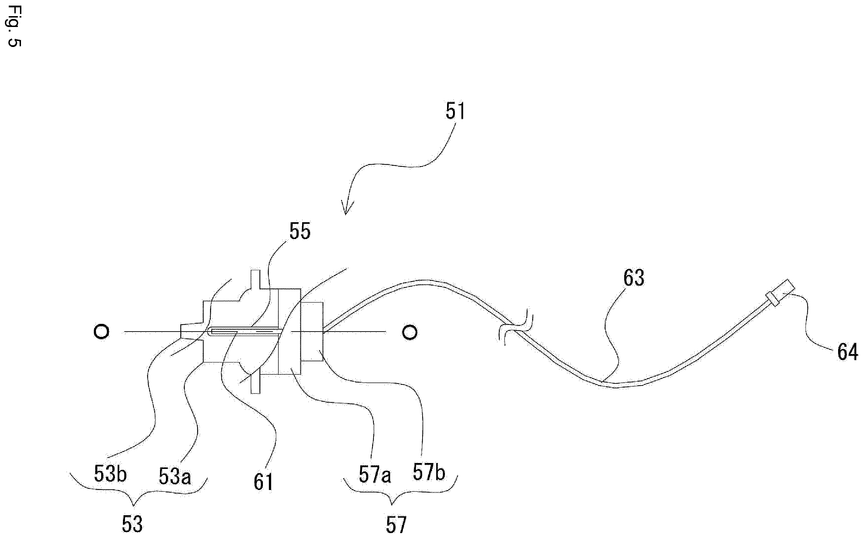

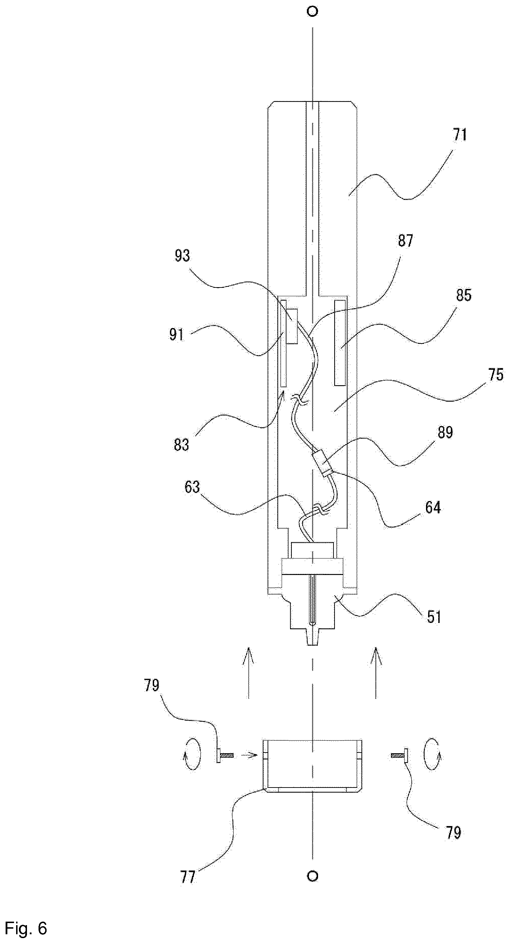

Hereinafter, a second embodiment of a rotary machining tool with a sensor for real-time condition detection according to the present invention will be described in detail with reference to FIGS. 5 and 6. In the same manner as the example of FIGS. 1 to 3, the present invention is not limited to the illustrated embodiment. For easy comprehension, dimensions, ratios, or numbers may be exaggerated or simplified as needed. Furthermore, in the following description, the same reference numbers will be used to refer to the same or like parts, a duplicate description of which will be omitted, in the same manner as in the previous embodiment.

A rotary machining tool 1 with a sensor for real-time condition detection according to the present invention, configured to be used as a rotary machining tool for friction stirring, will be described in detail with reference to FIG. 5. FIG. 5 is a partial sectional plan view schematically showing the structure of a friction stirring tool 51 with a sensor. As shown in FIG. 5, the friction stirring tool 51 with the sensor is rotatable about an axis of rotation O-O, and generally includes a friction stirring tool body unit 53, a sensor insertion unit 57, a thermocouple 61 (a temperature measurement element such as a thermistor or a platinum resistance thermometer may also be used), a cable 63, and a connector 64.

The friction stirring tool body unit 53 is a tool used for welding a member to be joined. The friction stirring tool body unit 53 includes a cylindrical shoulder portion 53a provided in the vicinity of the front end thereof that is opposite the end thereof to which the sensor insertion unit 57 is connected and a probe 53b that is coupled to the front end of the shoulder portion 53a, is rotated about the same axis as the axis of rotation, and protrudes downward to contact the member to be joined.

A cylindrical thermocouple insertion hole 55 is provided in the friction stirring tool body unit 53 so as to extend from the end thereof, on which the sensor insertion unit 57 is fitted, to the vicinity of the shoulder portion 53a or the probe 53b, which is opposite the end thereof. In FIG. 55, the thermocouple insertion hole 5 is located in the center of the friction stirring tool body unit 53 in the radial direction. However, the position of the thermocouple insertion hole 55 may be determined according to the purpose of temperature measurement. In addition, a plurality of thermocouple insertion holes 55 may be disposed in the friction stirring tool body unit 53 in the state of being spaced apart from each other in order to measure the temperatures of multiple places at the same time.

The sensor insertion unit 57 includes a connection portion 57a and a binding portion 57b. The connection portion 57a is capable of holding the end of the thermocouple 51 while pulling the end of the thermocouple 11 into the binding portion 57b. The connection portion 57a binds the thermocouple 51 and the cable 63 in the binding portion 57b. In addition, a small-sized acceleration sensor (not shown) or a load cell may be disposed in the binding portion 57b. Consequently, it is also possible to monitor the fine vibration of the friction stirring tool 51 with the sensor or the movement of the axis of the friction stirring tool 51 with the sensor, in addition to the temperature of the friction stirring tool 51 with the sensor while the friction stirring tool 51 with the sensor is used. Even in this case, information acquired by these sensors is transmitted to the outside in a wireless fashion in the same manner as temperature information.

The thermocouple 61 is inserted into the thermocouple insertion hole 55 formed in the friction stirring tool body unit 53, and the end of the friction stirring tool body unit 53 is integrally bonded to the connection portion 57a of the sensor insertion unit 57. The bonding method is performed using an adhesive for metal that withstands high temperatures. However, brazing may be used, or screw threads may be formed in the end of the friction stirring tool body unit 53 and in the connection portion 57a such that the end of the friction stirring tool body unit 53 and the connection portion 57a are engaged with each other. The cable 53 is inserted into the binding portion 7b from the side of the binding portion 57b that is opposite the connection portion 57a, and the cable 53 is bound to the end of the thermocouple 61 in the binding portion 57b, as described above.

The outside of the portion of the cable 63 that extends out of the binding portion 57b is coated with glass fiber that exhibits thermal resistance so as to be insulated, as needed, and a small-sized metal connector 54 having a predetermined length is connected to the front end of the cable 63. The connector 54 is connected to a reception connector 79 disposed in a friction stirring tool holder 71, a description of which will follow, and transmits information about the result of measurement in the friction stirring tool 51 with the sensor to the friction stirring tool holder 71.

Meanwhile, in the example of FIG. 5, the front end 55a of the thermocouple insertion hole 55 formed in the friction stirring tool body unit 53 is provided in the shoulder portion 53a of the friction stirring tool body unit 53 in the vicinity of the boundary between the shoulder portion 53a and the probe 53b, which is shown for clarity of the figure. In actuality, however, the thermocouple insertion hole 55 may reach the inside of the probe 53b in the case in which the probe 53b has a certain diameter and wear resistance.

Also, in the example of FIG. 6, one or more thermocouple insertion holes 55 are provided at least approximately along the axial line, in the same manner as in FIG. 1. A plurality of thermocouple insertion holes 55 may be provided in order to perform precise real-time temperature measurement. For example, a plurality of thermocouple insertion holes 55 may be provided radially outwards of and parallel to the thermocouple insertion hole 55 shown in FIG. 6.

Next, the structure of the friction stirring tool holder 71, which holds the friction stirring tool 51 with the sensor described above, and a method of holding the friction stirring tool 51 with the sensor will be described in detail with reference to FIG. 6. FIG. 6 is a sectional view showing the structure of the friction stirring tool holder 71 that holds the friction stirring tool 51 with the sensor.

The friction stirring tool holder 71 is an approximately cylindrical member that is rotatable about the axis of rotation O-O according to the movement of a friction stirring apparatus (not shown). The friction stirring tool holder 71 is provided at the front end thereof with a friction stirring tool fixing hole 73, which is open, and the friction stirring tool fixing hole 73 communicates with a hollow hole 75, which is disposed further inward than the friction stirring tool fixing hole 73. The friction stirring tool holder 71 is covered by a friction stirring tool fixing nut 77 and is fixed by fixing screws 79 such that the friction stirring tool 51 with the sensor is fixed in the friction stirring tool fixing hole 73.

Consequently, it is possible to hold the friction stirring tool 51 with the sensor irrespective of the size thereof. In addition, even in the case in which the friction stirring tool 51 with the sensor is severely broken due to trouble occurring during machining or even in the case in which the peripheral part of the friction stirring tool 51 with the sensor contacts anything other than a member to be joined due to incorrect manipulation of the friction stirring apparatus, the friction stirring tool holder 71 is prevented from being damaged, and it is sufficient to replace only the friction stirring tool fixing nut 77.

An electronic board 83 and a power supply unit 85 are disposed in the hollow hole 75. A reception cable 87, which extends from the electronic board 83, is provided at the front end thereof with a reception connector 89. The reception cable 87 is disposed in the hollow hole 75.

The electronic board 83 includes a temperature reception unit 91 and a transmission unit 93. The temperature reception unit 91 is configured to receive information about the temperature of the friction stirring tool body unit 53 from the thermocouple 61 via the cable 63 and the reception cable 87 in real time, and the transmission unit 93 is configured to transmit the information about the temperature of the friction stirring tool body unit 53 received by the temperature reception unit 91 to an external unit in a wireless fashion.

Next, a method of connecting and holding the friction stirring tool holder 71 and the friction stirring tool 51 with the sensor will be described. First, the reception cable 87, which is disposed in the hollow hole 75 formed in the friction stirring tool holder 71, is drawn from the friction stirring tool fixing hole 73, the reception connector 89 and the connector 64 of the friction stirring tool 51 with the sensor are connected to each other, the reception connector 89 and the connector 64, which are connected to each other, are received in the hollow hole 75, and the friction stirring tool 51 with the sensor is inserted into the friction stirring tool fixing hole 73.

After the friction stirring tool 51 with the sensor is inserted into the friction stirring tool fixing hole 73 until the end of the friction stirring tool 51 with the sensor comes into contact with the bottom of the friction stirring tool fixing hole 73, the friction stirring tool fixing nut 77 covers the shoulder portion 53a and the probe 53b of the friction stirring tool 51 with the sensor, and the friction stirring tool holder 71 and the friction stirring tool 51 with the sensor are fixed at opposite sides thereof in the direction that is perpendicular to the axis O-O of the friction stirring tool holder 71 (the radial direction) using fixing screws 79. As a result, the friction stirring tool holder 71 is rotatable with the friction stirring tool 51 with the sensor.

In addition, as described above, the power supply unit 85 is provided in the hollow hole 75, like the electronic board 83. The power supply unit 85 is configured to supply sufficient power to the electronic board 83, although the power supply unit 85 may be generally constituted by a rechargeable or non-rechargeable battery.

The flow of an electrical signal indicating information about the temperature of the friction stirring tool body unit 53, measured by the thermocouple 61, and a temperature measurement process using the friction stirring tool 51 with the sensor are identical to those in the first embodiment, although the names of the components constituting the respective embodiments are different from each other, and therefore figures thereof and descriptions thereof will be omitted.

In the first embodiment and the second embodiment, the present invention has been described as the end mill used for milling and as the friction stirring tool 51 with the sensor used for friction stirring. Since the dedicated thermocouple insertion hole 5 or 55 having a size corresponding to the size of the thermocouple 11 or 61 for temperature measurement is provided and the thermocouple 11 or 61 is inserted into the thermocouple insertion hole 5 or 55, however, it is possible to acquire a preferred size of the hole and accurate temperature measurement results, compared to the case in which a cooling hole, which is provided in a conventional rotary machining tool and a conventional friction stirring tool, is used instead.

In addition, since an arbitrary number of dedicated thermocouple insertion holes 5 or 55 can be disposed at arbitrary positions in the rotary machining tool body unit 3 or the friction stirring tool body unit 53, as described above, it is possible to more minutely measure the temperature in the rotary machining tool body unit 3 or the friction stirring tool body unit 53 during the use thereof.

Since the rotary machining tool 1 with the sensor or the friction stirring tool 51 with the sensor is configured such that the thermocouple insertion hole 5 or 55 having a necessary minimum size is disposed at an arbitrary position in the rotary machining tool body unit 3 or the friction stirring tool body unit 53, therefore, it is possible to minutely and accurately measure the temperature in the rotary machining tool body unit 3 or the friction stirring tool body unit 53 while preventing a reduction in the strength of the rotary machining tool body unit 3 or the friction stirring tool body unit 53 to the greatest extent possible. Furthermore, since the rotary machining tool 1 with the sensor or the friction stirring tool 51 with the sensor is mounted to the rotary machining tool holder 21 or the friction stirring tool holder 71 in order to perform temperature measurement, it is possible to simplify the work of a user and to omit troublesome labor, compared to a conventional apparatus configured such that the thermocouple and the rotary machining tool are prepared separately and are assembled before measurement.

Meanwhile, although the embodiments shown in FIGS. 1 to 6 are configured such that the thermocouple insertion hole 5 or 55 is provided in the sensor insertion unit 7 or the friction stirring tool 51 with the sensor and such that real-time heat measurement is performed during the rotation of the rotary machining tool 1 with the sensor or the friction stirring tool 51 with the sensor, it is also possible to monitor fine vibration of the rotary machining tool, the movement of the axis of the rotary machining tool, etc. as information about the real-time measurement, in addition to temperature. Although not shown, an acceleration sensor or a load cell may be disposed at the binding portion 7b of the sensor insertion unit 7 or the binding portion 57b of the sensor insertion unit 57 of the friction stirring tool 51 with the sensor so as to be connected to the cable 13 or 63, and information acquired by these sensors may be transmitted to the outside in a wireless fashion in the same manner as temperature information.

In addition, although, in FIGS. 1 to 6, temperature information from the thermocouple 11 or 61 is transmitted to the outside via the temperature reception unit 37 or 91, the transmission unit 37 or 93, and the power supply unit 37 or 85, which are provided in the tool holder 21 or 71, all of the temperature reception unit 37 or 91, the transmission unit 37 or 93, and the power supply unit 37 or 85 may be provided in the sensor insertion unit 7 or 57 of the rotary machining tool 1 with the sensor or the friction stirring tool 51 with the sensor.

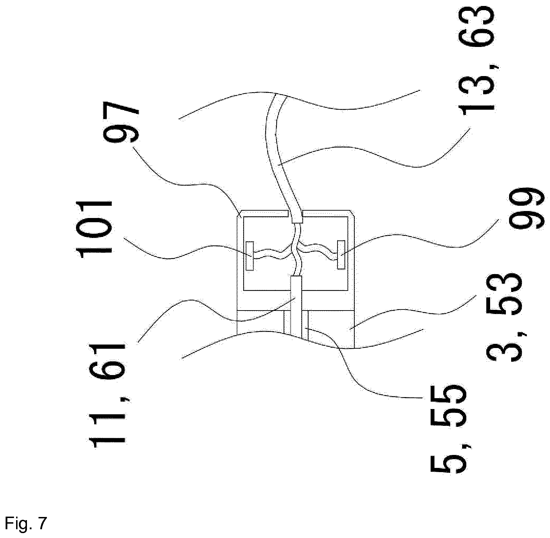

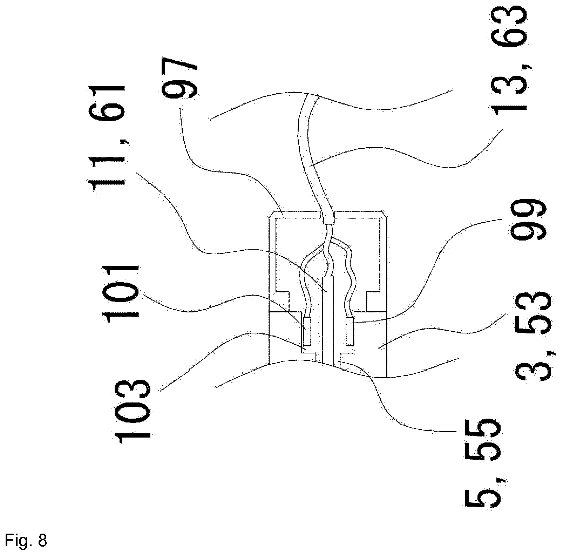

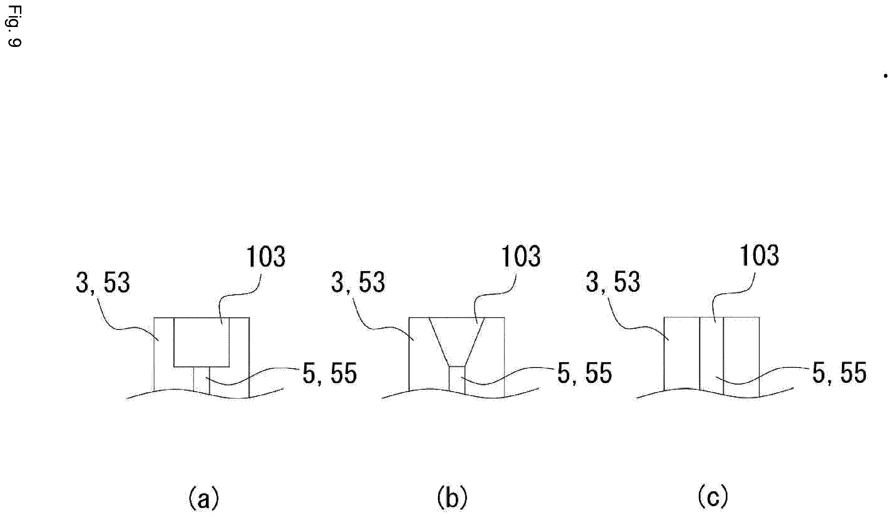

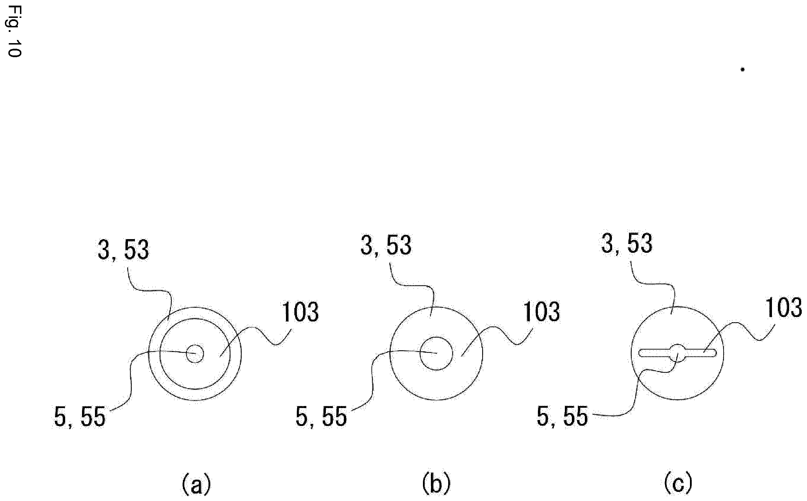

Next, a method of mounting a sensor (a small-sized acceleration sensor or a load cell), which is common to the first and second embodiments described above, will be described in detail with reference to FIGS. 7 to 10. FIG. 7 is a sectional view showing a sensor insertion unit 97, FIG. 8 is a sectional view showing the end of the thermocouple insertion hole 5 or 55 in the rotary machining tool body unit 3 or the friction stirring tool body unit 53, FIG. 9 is a sectional view showing examples of the shape of the end of the thermocouple insertion hole 5 or 55 in the rotary machining tool body unit 3 or the friction stirring tool body unit 53, and FIG. 10 is a side view showing examples of the shape of the end of the thermocouple insertion hole 5 or 55 in the rotary machining tool body unit 3 or the friction stirring tool body unit 53.

Although the sensor insertion unit 7 or 57 includes the connection portion 7a or 57a and the binding portion 7b or 57b in the first and second embodiments described above, the sensor insertion unit 7 or 57 may be a single member, as shown in FIG. 7. A sensor insertion unit 97, the interior of which is hollow, is fitted to the rear end of the rotary machining tool body unit 3 or the friction stirring tool body unit 53 using an adhesive that withstands high temperatures or a fitting method through brazing or screw threading. The sensor insertion unit 97 is capable of holding the end of the thermocouple 11 or 61 while pulling the end of the thermocouple 11 or 61 thereinto. The thermocouple 11 or 61 and the cable 13 or 63 are bound and fixed in the sensor insertion unit 97. In addition, a small-sized acceleration sensor 99 and a load cell 101 may be disposed in the sensor insertion unit 97. Consequently, it is also possible to monitor the fine vibration of the rotary machining tool body unit 3 or the friction stirring tool body unit 53 or the movement of the axis of the rotary machining tool body unit 3 or the friction stirring tool body unit 53, in addition to the temperature of the rotary machining tool body unit 3 or the friction stirring tool body unit 53, while the rotary machining tool body unit 3 or the friction stirring tool body unit 53 is used.

Next, a method of mounting the small-sized acceleration sensor 99 and the load cell 101 at the end of the thermocouple insertion hole 5 or 55 in the rotary machining tool body unit 3 or the friction stirring tool body unit 53 will be described with reference to FIG. 8. As shown in FIG. 8, a sensor placement opening 103 having an appropriately concave shape may be provided at the end of the thermocouple insertion hole 5 or 55 in the rotary machining tool body unit 3 or the friction stirring tool body unit 53, and the acceleration sensor 99 and the load cell 101 may be placed in the sensor placement opening 103 so as to be parallel to the thermocouple 11 or 61. Although it is necessary to perform a process for providing the sensor placement opening 103 in the rotary machining tool body unit 3 or the friction stirring tool body unit 53, it is possible to improve the measurement accuracy of the sensors since the acceleration sensor 99 and the load cell 101 are mounted in the rotary machining tool body unit 3 or the friction stirring tool body unit 53.

An end cover, the interior of which is hollow, is fitted to the rear end of the rotary machining tool body unit 3 or the friction stirring tool body unit 53 in order to protect the acceleration sensor 99 and the load cell 101 and to insulate the connection between the thermocouple 11 or 61 and the cable 13 or 63. The end cover is fitted to the rear end of the rotary machining tool body unit 3 or the friction stirring tool body unit 53 using an adhesive that withstands high temperatures or a fitting method through brazing or screw threading. The end of the thermocouple 11 or 61 is held while being pulled into the end cover. The thermocouple 11 or 61 and the cable 13 or 63 are bound and fixed in the end cover.

The sensor placement opening 103 described above may be formed so as to have any of various shapes. Specifically, the sensor placement opening 103 is an opening having a shape that spreads from the thermocouple insertion hole 5 or 55 in the radial direction and that includes a plurality of sides or curves or a combination thereof when viewed from the side at the rear end of the rotary machining tool body unit 3 or the friction stirring tool body unit 53.

FIGS. 9(a), 9(b), and 9(c) are sectional views showing the sensor placement opening 103 when viewed in the radial direction. Hereinafter, the shape of the sensor placement opening 103 will be described. Referring to FIG. 9(a), the sensor placement opening 103 has a shape that spreads from the thermocouple insertion hole 5 or 55 in the radial direction and has corners. It is not always necessary for the corners to have an angle of 90 degrees, and the corners may be chamfered so as to be curved. The thermocouple 11 or 61 is inserted into the thermocouple insertion hole 5 or 55, and the acceleration sensor 99 and the load cell 101 are placed in the sensor placement opening 103.

Referring to FIG. 9(b), the sensor placement opening 103 has a shape that spreads approximately straightly from the thermocouple insertion hole 5 or 55 in the radial direction. In the same manner as in FIG. 9(a), the thermocouple 11 or 61 is inserted into the thermocouple insertion hole 5 or 55, and the acceleration sensor 99 and the load cell 101 are placed in the sensor placement opening 103. Referring to FIG. 9(c), the sensor placement opening 103 has a shape that extends approximately straightly from the thermocouple insertion hole 5 or 55 to the rear end of the rotary machining tool body unit 3 or the friction stirring tool body unit 53 without change.

The sensor placement opening 103 is effective in the case in which the diameter of the thermocouple insertion hole 5 or 55 is large or in the case in which an extremely small-sized acceleration sensor 99 and load cell 101, which can be mounted in the thermocouple insertion hole 5 or 55 together with the thermocouple 11 or 61, is used. If the acceleration sensor 99 and the load cell 101 are mounted at the front end of the rotary machining tool body unit 3 or the friction stirring tool body unit 53, however, the acceleration sensor 99 and the load cell 101 may be damaged by heat generated during machining. Consequently, it is preferable to mount the acceleration sensor 99 and the load cell 101 at the rear end of the rotary machining tool body unit 3 or the friction stirring tool body unit 53, specifically within a region held by the collet nut 25.

FIGS. 10(a), 10(b), and 10(c) are side views of the sensor placement opening 103 in the radial direction when viewed from the side at the rear end of the rotary machining tool body unit 3 or the friction stirring tool body unit 53. Hereinafter, the shape of the sensor placement opening 103 will be described. Referring to FIG. 10(a), the sensor placement opening 103 has an approximately circular shape, which corresponds to the spread hole shape of the sensor placement opening 103, described with reference to FIGS. 9(a) and 9(b). When viewed from the side at the rear end of the rotary machining tool body unit 3 or the friction stirring tool body unit 53, the shape of the sensor placement opening 103 is almost the same as the shape of the thermocouple insertion hole 5 or 55. Alternatively, the sensor placement opening 103 may have a diameter equal to or greater than the diameter of the thermocouple insertion hole 5 or 55.

Referring to FIG. 10(b), the sensor placement opening 103 has an approximately circular shape. However, the shape of the sensor placement opening 103 is not greatly changed from that of the thermocouple insertion hole 5 or 55. Consequently, this shape of the sensor placement opening 103 corresponds to the shape of the sensor placement opening 103 described with reference to FIG. 9(c). Referring to FIG. 10(c), the sensor placement opening 103 has an approximately oval shape. The oval overlaps the thermocouple insertion hole 5 or 55. Consequently, this shape of the sensor placement opening 103 corresponds to the spread hole shape of the sensor placement opening 103 described with reference to FIGS. 9(a) and 9(b).

Although the shapes of the sensor placement opening 103 have been described with reference to FIGS. 9 and 10, the sensor placement opening 103 may have shapes that are similar to the above-described shapes or shapes that are different from the above-described shapes only in details.

### INDUSTRIAL APPLICABILITY

The present invention provides a rotary machining tool with the sensor for real-time condition detection, which is a rotary machining tool that becomes a workpiece of a rotary machining apparatus, such as an end mill, a drill, and a tap, wherein the rupture, breakage, or excessive wear of the tool can be measured in real time while having a specification similar to that of an ordinary tool without particular machining.

### DESCRIPTION OF REFERENCE SYMBOLS

- 1: Rotary machining tool with sensor
- 3: Rotary machining tool body unit
- 5: Thermocouple insertion hole
- 7: Sensor insertion unit
- 7a: Connection portion
- 7b: Binding portion
- 11: Thermocouple
- 13: Cable
- 14: Connector
- 21: Rotary machining tool holder
- 23: Hollow hole
- 24: Fastening nut
- 25: Collet nut
- 27: Cover member
- 28: Communication hole
- 29: Reception connector
- 30: Reception cable
- 31: Hollow layer
- 33: Electronic board
- 35: Power supply unit
- 37: Temperature reception unit
- 39: Transmission unit
- 41: Tool insertion hole
- 51: Friction stirring tool with sensor
- 53: Friction stirring tool body unit
- 53a: Shoulder portion
- 53b: Probe
- 55: Thermocouple insertion hole
- 57: Sensor insertion unit
- 57a: Connection portion
- 57b: Binding portion
- 61: Thermocouple
- 63: Cable
- 64: Connector
- 71: Friction stirring tool holder
- 73: Friction stirring tool fixing hole
- 75: Hollow hole
- 77: Friction stirring tool fixing nut
- 79: Fixing screws
- 83: Electronic board
- 85: Power supply unit
- 87: Reception cable
- 89: Reception connector
- 91: Temperature reception unit
- 93: Transmission unit
- 97: Sensor insertion unit
- 99: Acceleration sensor
- 101: Load cell
- 103: Sensor placement opening
- 105: End cover
- 113: Adhesive (Thermosetting material; Dotite)

## Claims

1. A rotary machining tool (1 ; 51) connected to a front end of a rotary machining apparatus that is rotatable about an axis of rotation so as to rotate about a same axis as the axis of rotation for machining a member to be machined in a state in which a front end of the rotary machining tool is in contact with the member to be machined, the rotary machining tool comprising at least:
a vertically long sensor mounting hole(5;55) having a central axial line that is approximately coaxial with the axis of rotation, a front end of the sensor mounting hole being open to an outside at a rear end of a body unit (3; 53) of the rotary machining tool, a rear end of the sensor mounting hole being closed from the outside at a height higher than a front end of the rotary machining tool body unit; and
a sensor (11; 61) inserted into the sensor mounting hole through the rear end of the sensor mounting hole so as to be positioned at the front end of the sensor mounting hole for sensing a condition in a state in which the sensor is positioned.

2. The rotary machining tool according to claim 1, further comprising a sensor insertion unit (7; 57) connected to one end of the sensor and coupled to a rear end of the rotary machining tool.

3. The rotary machining tool according to claim 2, wherein the sensor is a thermocouple.

4. The rotary machining tool according to claim 3, wherein
the sensor insertion unit has a connection portion(7a;57a) connected to the front end of the rotary machining tool body unit and a binding portion(7b;57b) connected to the connection portion, and
one end of the thermocouple is fixed to the connection portion, the binding portion having a cable (13; 63) connected to the one end of the thermocouple so as to protrude to the outside, the binding portion being electrically conductive.

5. The rotary machining tool according to claim 4, wherein the connection portion is determined in advance in consideration of the rotary machining tool body unit, and the binding portion has a standardized shape.

6. The rotary machining tool according to claim 4 or 5, wherein an acceleration sensor and/or a load cell is mounted in the binding portion, and one end of the cable is connected to the acceleration sensor and/or the load cell.

7. The rotary machining tool according to claim 4, wherein
the sensor insertion unit has a connection portion connected to the front end of the rotary machining tool body unit and a binding portion connected to the connection portion, and
one end of the thermocouple is fixed to the connection portion, the binding portion having a temperature reception unit (37; 91) connected to the one end of the thermocouple for receiving temperature information from the thermocouple and a transmission unit (39; 93) for transmitting the temperature information received by the temperature reception unit to the outside in a wireless fashion.

8. The rotary machining tool according to claim 3, wherein
the sensor insertion unit has a cable for fixing one end of the thermocouple,
the cable being connected to the one end of the thermocouple so as to protrude to the outside, the cable being electrically conductive.

9. The rotary machining tool according to claim 8, wherein an acceleration sensor and/or a load cell is mounted in the sensor insertion unit.

10. The rotary machining tool according to claim 8, wherein the sensor insertion unit has a temperature reception unit connected to the one end of the thermocouple for receiving temperature information from the thermocouple and a transmission unit for transmitting the temperature information received by the temperature reception unit to the outside in a wireless fashion.

11. The rotary machining tool according to claim 1, further comprising:
a sensor placement opening(103) configured to communicate with the rear end of the sensor mounting hole, the sensor placement opening being open at a rear end of the rotary machining tool; and
a sensor insertion unit(97) connected to one end of the sensor and coupled to the front end of the rotary machining tool.

12. The rotary machining tool according to claim 11, wherein the sensor placement opening spreads from the sensor mounting hole in a radial direction.

13. The rotary machining tool according to claim 11, wherein the sensor placement opening is provided at a region held by the rotary machining apparatus.

14. The rotary machining tool according to claim 1, wherein a gap between the sensor and the sensor mounting hole is filled with a thermosetting material containing silver particles, the thermosetting material being heat-treated in a state in which the sensor is inserted into the sensor mounting hole.

15. The rotary machining tool according to claim 10, wherein the temperature information transmitted to the outside by the transmission unit in the wireless fashion is digital information, and the rotary machining tool further comprises a digital to analog conversion means for receiving the temperature information, converting the received temperature information into analog information, and outputting the converted analog information as a voltage signal.
